# EUROPEAN PATENT APPLICATION

(11) **EP 0 931 822 A1**
(43) Date of publication of application: **28.07.1999**
(21) Application number: 98850014.6
(22) Date of filing: 23.01.1998
(51) Int. Cl.: C09J 5/02, C08J 3/24, C09J 161/20

(54) **A method for joining together two surfaces**

(71) Applicant: AKZO NOBEL N.V., 6800 SB Arnhem (NL); Casco Products AB, 100 61 Stockholm (SE)
(72) Inventor: Ljungar, Robin, 183 38 Täby (SE); Norling, Hakan, 112023 Stockholm (SE)
(74) Representative: Jönsson, Christer

(57) **Abstract**

A method for joining two surfaces in which a liquid component is applied to one surface and a dry component is applied on the liquid component, and the assembly pressed, in which the dry component is positioned between the surfaces and comprises a fibrous sheet, the liquid component is brought to penetrate through the sheet, and the sheet comprises a substance that interacts with the liquid component to form a joint between the surfaces. A hardener component adapted to be used as the dry component in the method, in which the component comprises a sheet of cellulosic fibres comprising a hardener. A method for production of the hardener component, in which a sheet of cellulosic fibres is impregnated with a solution of a hardener, and the sheet is dried.

## Description

The present invention relates to a method for joining together two surfaces, and to a hardener component adapted to be used in said method. It also relates to a method for production of said hardener component.

DE 1 254 007 relates to a method of forming adhesive joints between layers of sheet material, in which the adhesive is activated by a hardener but is applied in the hardener-free state, and the sheet material for one side of each joint is impregnated with a hardener for the adhesive. Examples are given of agglutination of the surfaces of two paper webs, the first one of which is coated with a urea-formaldehyde resin, while the second one is impregnated with a solution of a hardener for the resin. A drawback related to this prior art technology is that a considerable portion of the hardener is not accessible to the resin, due to absorption during the impregnation of the hardener solution into the porous structure of second paper web.

The problem to be solved by the present invention is thus to provide a method for joining together two surfaces that is not loaded with the drawback indicated above.

This problem is solved by the method as defined by appended Claim 1.

More specifically, the present invention relates to a method for joining together surfaces of two substrates in which a liquid component is applied to one of the surfaces, a dry component is applied on the liquid component, and the assembly comprising the two substrates and said components are pressed essentially perpendicularly to the surfaces to be joined, whereby said dry component is positioned between the surfaces of the two substrates and comprises a fibrous sheet, said liquid component is brought to penetrate through said fibrous sheet during the pressing, and said fibrous sheet comprises a substance that interacts with said liquid component to form a joint between the surfaces. The fibrous sheet is a preferably a sheet comprising cellulosic fibres. In a preferred embodiment of the present method the liquid component comprises a glue and the dry component comprises a hardener.

Apart from solving the problem indicated above, the present invention has a number of additional advantages. The dry component is easy to handle, particularly when compared to prior art methods in which the glue and the hardener are applied separately by means of different rolls, whereby contamination of the rolls is a common problem. Furthermore, conventional liquid hardener compositions used in such methods are usually less suited for storage. The present invention, however, allows easy handling of a hardener component comprising a cellulosic sheet containing an essentially dry hardener, that may be stored for long periods of time. In addition, the present method is particularly suited for situations where small amounts of glue and/or hardener are to be used, and for situations where fast curing systems of glue and hardener are to be used. The present method may be used for cold pressing as well as for warm pressing.

The liquid and dry components referred to above can be any substances which, when brought together, interact so as to form a joint between the surfaces. In a preferred embodiment, however, of the present invention, the liquid and dry components are comprised in a gluing system, the liquid component preferably being a glue or resin, and the dry component preferably being a hardener. In the present context the term "hardener" refers both to catalytic hardeners and reactive curing agents.

In a preferred embodiment of the present method the glue is a formaldehyde resin glue and the hardener is an acidic salt or an ammonium salt. In the present context an acidic salt is a salt that, when in an aqueous solution, provides for acidic reaction of that solution, or which, when brought in contact with an aqueous glue, gives rise to or turns into an acidic substance. The concept of "formaldehyde resin glue" comprises, but is not limited to, melamine-formaldehyde glues, urea-formaldehyde glues, melamine-urea-formaldehyde glues, resorcinol-formaldehyde glues, phenol-formaldehyde glues, and phenol-resorcinol-formaldehyde glues.

In another preferred embodiment the glue is a polyvinyl acetate glue and the hardener an aluminum salt or a chromium salt.

The dry content of the glue is preferably about 50 - 70% by weight. In the present method, the glue is preferably applied on the surface of the first substrate in an amount of about 50 - 300 g/m², preferably about 100 - 150 g/m².

It is particularly preferred that present method comprises the steps of coating one surface of the first substrate to be agglutinated with glue; applying a cellulosic sheet comprising a hardener on the glue coated surface of the first substrate; applying the second substrate, with the surface to be agglutinated facing the cellulosic sheet; and applying pressure on the assembly of said first substrat, said cellulosic sheet, and said second substrate, essentially perpendicularly to the surfaces to be agglutinated, whereby the pressure is sufficient to allow the glue to penetrate said cellulosic sheet and to wet the surface of said second substrate.

The present invention also relates to a hardener component that is adapted to be used as the dry component in the present method; the present hardener component comprises a sheet of cellulosic fibres comprising a hardener. What specific substance or composition that is to be used as hardener obviously depends on what specific glue is chosen in the specific case, and vice versa; it also depends on the desired curing speed. Non-limiting examples of hardeners that may be used in the present hardener component are: ammonium chloride, maleic anhydride, aluminium sulphate, p-toluene sulphonic acid, and paraformaldehyde.

In a preferred embodiment the hardener in the present hardener component is soluble in water and is bound to the cellulosic fibres. The sheet of cellulosic fibres, excluding the hardener, preferably has a grammage of about 10 - 60 g/m², preferably 14 - 25 g/m²; the sheet of cellulosic fibres may be produced from mechanical or chemical pulp, and is preferably made from bleached sulphate pulp. Furthermore, the sheet of cellulosic fibres preferably comprises up to about 30 g/m², preferably about 0.5 - 25 g/m², and most preferably about 2 - 4.5 g/m², of the hardener.

The present invention also relates to a process for production of the present hardener component, in which a sheet of cellulosic fibres is impregnated with a solution of a hardener, and the sheet is dried. The solution, which preferably, mainly due to environmental considerations, is an aqueous solution, is preferably saturated with respect to the hardener. In a preferred embodiment of the present process, the solution of the hardener is sprayed onto the sheet. Optionally, fillers may be added to the hardener component by binding the fillers to the fibres by means of some binder, e.g. polyvinyl alcohol.

Below, the present invention is described in more detail by means of some non-limiting examples.

Example 1: A sheet of cellulosic fibres from bleached sulphate pulp, having a grammage of 20 g/m², was impregnated with 3.0 g/m² of maleic anhydride. The impregnation was carried out by spraying a 10% solution of maleic acid onto the sheet, which then was allowed to dry, whereby maleic anhydride was precipitated and bound to the fibres. The thus prepared sheet was used to veneer a particle board. The board was coated with 120 g/m2 of urea-formaldehyde glue; the hardener-carrying sheet was applied onto the glue coating; and a 0.6 mm beech wood veneer was applied on top of the sheet. The assembly of the particle board, the hardener-carrying sheet, and the beech wood veneer was placed in a hot-press equipment, and was subjected to a pressure of 0.5 MPa for 15 seconds at a temperature of 110°C. The resulting, veneered board was allowed to cool to ambient temperature, and was then subjected to a test, in which the veneer was torn from the particle board. As the fracture occurred solely in the surface of the particle board, the glue joint was assessed to be successful.

Example 2: A sheet of cellulosic fibres of the same kind as in Example 1 was impregnated with 2.7 g/m² of ammonium chloride. The impregnation was carried out in the same way as in Example 1. The prepared sheet was used to veneer a particle board in the same way as in Example 1, except that the assembly of the board, the sheet, and the veneer was subjected to pressure for a minute instead of 15 seconds. The veneered board was tested as in Example 1, and as the fracture occurred solely in the surface of the particle board, the glue joint was assessed to be successful.

## Claims

1. A method for joining together surfaces of two substrates in which a liquid component is applied to one of the surfaces, a dry component is applied on the liquid component, and the assembly comprising the two substrates and said components are pressed essentially perpendicularly to the surfaces to be joined, **characterised** in that
- said dry component is positioned between the surfaces of the two substrates and comprises a fibrous sheet;
- said liquid component is brought to penetrate through said fibrous sheet during the pressing; and
- said fibrous sheet comprises a substance that interacts with said liquid component to form a joint between the surfaces.

2. A method according to claim 1, **characterised** in that fibrous sheet is a sheet comprising cellulosic fibres.

3. A method according to any preceding claim, **characterised** in that the liquid component comprises a glue and the dry component comprises a hardener.

4. A method according to claim 3, **characterised** in that the hardener
is a reactive curing agent.

5. A method according to any of claims 3-4, **characterised** in that it comprises the steps of
- coating one surface of the first substrate to be agglutinated with glue;
- applying a cellulosic sheet comprising a hardener on the glue coated surface of the first substrate;
- applying the second substrate, with the surface to be agglutinated facing the cellulosic sheet; and
- applying pressure on the assembly of said first substrat, said cellulosic sheet, and said second substrate, essentially perpendicularly to the surfaces to be agglutinated, whereby the pressure is sufficient to allow the glue to penetrate said cellulosic sheet and to wet the surface of said second substrate.

6. A method according to any of claims 3 - 5, **characterised** in that the glue is a formaldehyde resin glue and the hardener is an acidic salt or an ammonium salt.

7. A method according to any of claims 3 - 5, **characterised** in that the glue is a polyvinyl acetate glue and the hardener is an aluminum salt or a chromium salt.

8. Hardener component adapted to be used as said dry component in a method according to any preceding claim, **characterised** in that the component comprises a sheet of cellulosic fibres comprising a hardener.

9. Hardener component according to claim 8, **characterised** in that the hardener is soluble in water and is bound to the cellulosic fibres, and in that sheet of cellulosic fibres, excluding the hardener, has a grammage of about 10 - 60 g/m².

10. Hardener component according to claim 8, **characterised** in that sheet of cellulosic fibres comprises up to about 30 g/m² of the hardener.

11. Method for production of the hardener component according to any of claims 8 - 10, **characterised** in that a sheet of cellulosic fibres is impregnated with a solution of a hardener, and the sheet is dried.

12. Method according to claim 11, **characterised** in that the solution is an aqueous solution.

13. Method according to claim 11 or 12, c**haracterised** in that the solution is saturated with respect to the hardener.

14. Method according to any of claims 11 - 13, **characterised** in that the solution is sprayed onto the sheet of cellulosic fibres.
